# EUROPÄISCHE PATENTANMELDUNG

(11) **EP 4 446 254 A1**
(43) Veröffentlichungstag der Anmeldung: **16.10.2024**
(21) Anmeldenummer: 23167321.1
(22) Anmeldetag: 11.04.2023
(51) Int. Cl.: B65G 1/06

(54) **AUTOMATISIERTES LAGERSYSTEM MIT HOHER DICHTE UND VERFAHREN ZUM EIN- UND AUSLAGERN VON BEHÄLTERN**

(71) Anmelder: Humburg, Holger, 63457 Hanau (DE)
(72) Erfinder: Humburg, Holger, 63457 Hanau (DE)
(74) Vertreter: Keil & Schaafhausen Patentanwälte PartGmbB

(57) **Zusammenfassung**

Die Erfindung betrifft ein automatisiertes Lagersystem (1) sowie ein Verfahren zum Ein- und Auslagern von Behältern (5) in einem solchen Lagersystem. Hierzu ist das Lagersystem (1) mit wenigstens einem Regal (2a, 2b), das parallel zu einer Gasse (3) angeordnet ist und wenigstens eine Ebene mit mehreren quer zur Gasse (3) angeordneten Kanälen (4) aufweist, sowie wenigstens einem in der Gasse (3) verfahrbaren Gassenfahrzeug (6) und einer Steuerung zum autonomen Verfahren des wenigstens einen Gassenfahrzeugs (6) ausgestattet. Die Kanäle (4) sind gegenüber der Horizontalen derart geneigt ausgerichtet, dass das der Gasse (3) zugewandte Ende jedes Kanals (4) vertikal unterhalb des der Gasse (3) abgewandten Endes des jeweiligen Kanals (4) liegt. Erfindungsgemäß weist das Gassenfahrzeug (6) ein Shuttlefahrzeug (7) auf, das zum Einlagern von Behältern (5) in die Kanäle (4) dazu ausgebildet und eingerichtet ist, relativ zu dem Gassenfahrzeug (6) und quer zur Gasse (3) in die Kanäle (4) hinein zu fahren.

## Beschreibung

Die Erfindung betrifft ein automatisiertes Lagersystem sowie ein Verfahren zum Ein- und Auslagern von Behältern in einem solchen Lagersystem.

Automatisierte Lagersysteme werden in modernen Logistikprozessen zum Kommissionieren, Puffern, Sequenzieren von Waren und Aufträgen und zur Versorgung von Arbeitsplätzen eingesetzt. Hierbei werden u.a. in automatischen Kleinteilelagern Shuttle-Systeme eingesetzt, die aus einer Vielzahl meist baugleicher Behälter, die in einem Regal aufgenommen sind, einen Behälter aufnehmen und zu einer Übergabe- oder Bearbeitungsstation befördern. In gleicher Weise werden die Behälter mittels der Shuttle-Systeme wieder in das Regal einsortiert.

Grundsätzlich sind reine Shuttlesysteme bekannt, in denen das Fördergut in einem Fachbodenregal oder auf statischen Schienen aufliegt und von einem Gassenfahrzeug überwiegend mit einem Push/Pull Device einfach, zweifach oder selten auch mehrfach tief gegriffen wird. Diese Systeme sind sehr schnell im Durchsatz, so lange sie nicht erst den letzten Behälter freiräumen müssen. Solche Shuttlesysteme werden u.a. von KNAPP (Graz), Dematic (Heusenstamm) und TGW (Linz) angeboten.

Weiter existiert unter der Bezeichnung AutoStore ein System, in dem die Kanäle vertikal angeordnet sind und Fahrzeuge oben auf dem Regal fahren. Bei einem notwendige Ausräumen des vertikalen Kanals, um an die unteren Behälter zu kommen, wird die oberliegende Fahrbahn rund um den benutzten Kanal mit den Behältern vollgestellt und verhindert ungehinderten Materialfluss der oben fahrenden Geräte.

Eine modular aufgebaute Lager- und Kommissioniereinrichtung ist beispielsweise aus der DE 10 2017 129 120 B4 bekannt. Hierbei weist eine regalartige Lagereinheit mehrere Ebenen übereinander auf, die jeweils mehrere Kanäle umfassen, in denen jeweils mehrere Behälter abstellbar sind. Jeder der Kanäle ist als eine Rollenbahn ausgebildet und gegenüber der Horizontalen schräg angeordnet, sodass Behälter in den Kanälen aufgrund der Schwerkraft zu dem niedriger gelegenen Ende hin rollen bzw. rutschen. Die Länge der Kanäle ist dabei so bemessen, dass in jedem Kanal beispielsweise fünf Behälter aufgenommen werden können.

Auf beiden Seiten der regalartigen Lagereinheit ist jeweils eine Fördereinheit vorgesehen, in der Shuttlefahrzeuge zwischen den einzelnen Ebenen und zwischen den einzelnen Kanälen verfahren werden können. Behälter werden aus der regalartigen Lagereinheit von einer der beiden Fördereinheiten jeweils von dem niedriger gelegenen Ende des jeweiligen Kanals entnommen. Das Einlagern von Behältern erfolgt mittels der anderen Fördereinheit, in dem einzelne Behälter in das höher gelegene Ende des jeweiligen Kanals eingesetzt werden und dort, falls der Kanal noch nicht vollständig mit Behältern befüllt ist, aufgrund der Schwerkraft zu dem niedriger gelegenen Ende hin rollen bzw. rutschen.

Falls sich der angeforderte Behälter nicht an vorderster Position des Kanals befindet, entnimmt die Fördereinheit zunächst alle vor ihm stehenden Behälter nacheinander und setzt sie auf einem Rücklagerförderer ab. Alternativ ist es möglich, einige Kanäle gruppenweise in entgegengesetzter Neigungsrichtung anzuordnen, so dass, falls sich der angeforderte Behälter nicht an vorderster Position des Kanals befindet, die Fördereinheit zunächst alle vor ihm stehenden Behälter nacheinander entnimmt und sie in das oben liegende Ende eines freien entgegengesetzt verlaufenden Kanals absetzt.

Ausgehend von diesem Stand der Technik ist es eine Aufgabe der vorliegenden Erfindung, ein automatisiertes Lagersystem bereitzustellen, dass bei vergleichbarem Platzbedarf und vergleichbarer Zugriffsgeschwindigkeit eine grö-βere Anzahl von Behältern aufnehmen kann.

Diese Aufgabe wird mit einem Lagersystem mit den Merkmalen des Anspruchs 1 bzw. mit einem Verfahren mit den Merkmalen des Anspruchs 13 gelöst.

Ein erfindungsgemäßes automatisiertes Lagersystem besteht im Wesentlichen aus wenigstens einem Regal, wenigstens einem Gassenfahrzeug sowie einer Steuerung. Das wenigstens eine Regal ist parallel zu einer Gasse angeordnet und weist wenigstens eine Ebene, vorzugsweise mehrere ggf. durch wenigstens einen Lift oder Heber verbundene Ebenen, mit mehreren quer zur Gasse angeordneten Kanälen auf. Dabei sind die Kanäle gegenüber der Horizontalen derart geneigt ausgerichtet, dass das der Gasse zugewandte Ende jedes Kanals vertikal unterhalb des der Gasse abgewandten Endes des jeweiligen Kanals liegt. Das Gassenfahrzeug ist in der Gasse entlang der der Gasse zugewandten Enden der Kanäle verfahrbar, um das Auslagern von Behältern aus den Kanälen zu ermöglichen. Die Steuerung zum autonomen Verfahren des wenigstens einen Gassenfahrzeugs ausgebildet und eingerichtet.

Der Erfindung liegt der Gedanke zugrunde, dass die Lagerdichte der Behälter dadurch gesteigert werden kann, wenn das Gassenfahrzeug nicht nur zum Auslagern von Behältern aus den Kanälen verwendet wird, sondern auch zum Einlagern von Behältern in die Kanäle eingesetzt werden kann. Hierzu weist das Gassenfahrzeug ein Shuttlefahrzeug auf, das zum Einlagern von Behältern in die Kanäle dazu ausgebildet und eingerichtet ist, relativ zu dem Gassenfahrzeug und quer zur Gasse in die Kanäle hinein zu fahren. Dies kann z.B. mittels eines formschlüssigen Kontakts zwischen Shuttlefahrzeug und Kanal erfolgen.

Gegenüber reinen Shuttlesystemen hat die erfindungsgemäße Lösung, bei der das Shuttlefahrzeug im Kanal bergauf fährt, den Vorteil, dass immer nur der erste Behälter aus dem Kanal ausgelagert werden muss und im Zeitschatten der Bewegung des Gassenfahrzeugs zum Lift oder auf eine Parkposition rollen oder rutschen die anderen Behälter des Kanals, aus dem der Behälter entnommen wurde, allein bergab bis zum Kanalendanschlag. Mit anderen Worten kann das Shuttlefahrzeug einen Behälter innerhalb des geneigt verlaufenden Kanals bergauf fahren und dabei etwaige weitere Behälter in dem Kanal bergauf verschieben. Damit findet die Einlagerung der Behälter nicht wie im Stand der Technik am oberen Ende eines geneigt verlaufenden Kanals statt, sondern am unteren Ende des Kanals und somit an der Stelle, an der das Gassenfahrzeug fährt.

Auf diese Weise ist es möglich, die nach dem Stand der Technik erforderliche Bedienung von beiden Seiten der Kanäle einzusparen und aus einer einzigen Gasse heraus Behälter in die Kanäle einzulagern und aus diesen auszulagern. Somit lässt sich bei vergleichbarem Platzbedarf eine höhere Dichte der eingelagerten Behälter erzielen. Zudem verbessert sich die Zugriffsgeschwindigkeit gegenüber bekannten Lösungen mit einem Rücklagerförderer.

Damit das Shuttlefahrzeug innerhalb eines geneigten Kanals bergauf fahren und dabei auch in dem Kanal vorhandene Behälter gegen die Schwerkraft verschieben kann, wird es bevorzugt, wenn das Shuttlefahrzeug antreibbar ist und über ausreichende Traktion verfügt, beispielsweise mittels formschlüssigen Kontakts zum Kanal. Hierzu kann jeder Kanal wenigstens eine quer zur Gasse verlaufende Zahnstange aufweisen, in die wenigstens ein antreibbares Zahnrad des Shuttlefahrzeugs eingreifen kann. Vorzugsweise sind pro Kanal zwei Zahnstangen vorgesehen und das Shuttlefahrzeig hat zwei oder vier Zahnräder, die mit den Zahnstangen in Eingriff stehen. Die zwei oder vier Zahnräder sind nur im Eingriff mit den Zahnstangen des Kanals, wenn sie sich im Kanal befinden. Ansonsten stehen die Zahnräder im Eingriff mit Zahnstangen, die auf dem Gassenfahrzeug vorgesehen sind. Das Shuttlefahrzeug kann auch mit einem Raupenantrieb und Zahnprofil für eine durchgehende kraftschlüssige Verbindung ausgestattet sein. Alternativ sind andere Antriebsarten geeignet, beispielsweise ein Shuttlefahrzeug mit gummierten Antriebsrädern oder Antriebsrädern oder mit Vulkollan, das auf einer Fahrbahn fährt, die ggf. ausreichend rauh gestaltet ist.

Nach einer weiteren Alternative kann sich das Shuttlefahrzeug an dem Gassenfahrzeug abstützen und relativ zu diesem hydraulisch und/oder pneumatisch bewegt werden. Die Kombination aus Gassenfahrzeug und Shuttlefahrzeug kann auch wie ein Bediengerät (sog. Miniload) eines automatisierten Kleinteillagers (AKL) ausgeführt werden. Mit anderen Worten müssen Gassenfahrzeug und Shuttlefahrzeug keine separaten Fahrzeuge sein, sondern können als relativ zueinander bewegbare Komponenten eines Fahrzeugs ausgebildet sein. Auf diese Weise kann ein einfaches Miniload mit Gabel alle Ebenen abdecken und genauso Behälter aus den Kanälen holen und in die Kanäle schieben. Diese Ausführungsform der Erfindung, bei der Gassenfahrzeug und Shuttlefahrzeug wie ein Bediengerät eines automatisierten Kleinteillagers ausgeführt sind, bedingt allerdings eine geringere Durchsatzleistung. Dafür entfallen die separaten Gassenfahrzeuge in jeder Ebene sowie auch die Lifte am Ende der Gasse. Die gleiche Funktion bei geringeren Kosten und Durchsatzleistung wird auch mit einem Miniload mit einem separaten, mitfahrendem Shuttlefahrzeug erzielt.

Es hat sich als vorteilhaft erwiesen, wenn die Kanäle gegenüber der Horizontalen um 1° bis 3°, insbesondere um etwa 1,8°, geneigt ausgerichtet sind. Das entspricht einer Steigung von beispielsweise 4%.

Ein Lagersystem, in dem Behälter besonders dicht gelagert werden können, kann dadurch realisiert werden, dass die Länge der Kanäle derart auf die Größe der ein- und auszulagernden Behälter abgestimmt ist, dass jeder Kanal zwischen etwa fünf und etwa zwölf Behälter, vorzugsweise acht bis zehn Behälter, aufnehmen kann.

Wenn die Kanäle als Röllchenbahnen, Rollenbahnen und/oder als Kugelbahnen ausgebildet sind, lassen sich die Behälter leichtgängig in den Kanälen bewegen. Bei einer Steigung von beispielsweise 4% rollen bzw. rutschen die Behälter dann auch selbsttätig in Richtung zu dem unteren Ende des jeweiligen Kanals.

In dem automatisierten Lagersystem können in jeder Ebene Schienen parallel zur Gasse verlaufen, auf denen das Gassenfahrzeug verfahrbar ist. Das Gassenfahrzeug ist dabei vorzugsweise dazu eingerichtet, schienengeführt nur entlang der Gasse zu verfahren. Mit anderen Worten entfallen Hubeinrichtungen, die das Gassenfahrzeug zwischen verschiedenen Ebenen bewegen könnten und das Gassenfahrzeug muss aufgrund der Eigenschaften des Shuttlefahrzeugs auch nicht quer zur Gasse verfahren können. Dies erlaubt einen robusten und einfachen Aufbau, der einen störungsarmen Betrieb ermöglicht.

Nach einer bevorzugten Ausführungsform des Lagersystems ist in jeder Ebene wenigstens ein quer zur Gasse verlaufender Zwischenförderer, beispielsweise ein Förderband, vorgesehen. Zusätzlich oder alternativ kann in einem Lagersystem, bei dem das Regal übereinander mehrere Ebenen aufweist, wenigstens ein Lift vorgesehen sein, der dazu ausgebildet und eingerichtet ist, Behälter zwischen den Ebenen zu verfahren. Der Zwischenförderer übernimmt beispielsweise Behälter vom Gassenfahrzeug bzw. vom Shuttlefahrzeug und führt sie dem Lift zu oder umgekehrt. Dabei kann der Zwischenförderer die Funktion eines Pufferspeichers übernehmen, so dass das Gassenfahrzeug nicht auf den Lift warten muss.

In einem bevorzugten Beispiel sind an einer Stirnseite des Lagersystems, d.h. an einem Ende der Gasse, für jedes Regal ein Lift und je Ebene ein Zwischenförderer vorgesehen. Damit ist es möglich, dass bei zwei beidseits der Gasse vorgesehenen Regalen ein Lift mit den je Ebene vorgesehenen Zwischenförderern einzulagernde Behälter zu den Shuttle- und Gassenfahrzeugen der jeweiligen Ebene transportiert, wogegen der andere Lift mit den je Ebene vorgesehenen Zwischenförderern auszulagernde Behälter von den Shuttle- und Gassenfahrzeugen der jeweiligen Ebene übernimmt. Nach einer weiteren Alternative kann die Kombination aus Gassenfahrzeug und Shuttlefahrzeug Gassenwechsel zwischen verschiedenen Ebnen mit einem zusätzlichen Heber, z.B. an der Stirnseite des Regals, ausführen. Bei dieser Ausführungsform wird die gleiche Funktion bei geringerer Durchsatzleistung und geringeren Kosten erreicht.

Das Shuttlefahrzeug kann mit dem Gassenfahrzeug über eine Energieversorgungs- und/oder Signalleitung verbunden sein. Das Gassenfahrzeug kann über Stromschienen mit einer Energiequelle verbunden sein. Nach einer Ausführungsform sind das Shuttlefahrzeug und das Gassenfahrzeug mit einem aufrollbaren Kabel für die Stromversorgung, beispielsweise eine 48V Leitung, sowie eine Signalleitung verbunden. Die Energieversorgungs- und/oder Signalleitung kann auch durch eine im Shuttlefahrzeug mitfahrende Batterie oder SuperCap (Kondensator) und/oder einen drahtlose Signalaustausch ersetzt werden. Auch das Gassenfahrzeug kann mit 48V betrieben werden und wird beispielsweise von einer einfachen 2-poligen Stromschiene gespeist. Dabei wird es bevorzugt, wenn das Shuttlefahrzeug und das Gassenfahrzeug jeweils voneinander unabhängige Antriebsmotoren aufweisen.

Das Shuttlefahrzeug kann eine Hubeinrichtung aufweisen, mittels derer ein Behälter zum Ein- und/oder Auslagern innerhalb eines Kanals anhebbar ist. Alternativ hierzu kann ein Behälter von dem Gassenfahrzeug auch mittels einer Gabel oder dgl. gegriffen und transportiert werden.

Für eine große Lagerdicht wird es bevorzugt, wenn in dem automatisierten Lagersystem beidseits der Gasse jeweils ein Regal vorgesehen ist. Dabei können die Kanäle beider Regale gegenüber der Horizontalen derart geneigt ausgerichtet sein, dass das der Gasse zugewandte Ende jedes Kanals vertikal unterhalb des der Gasse abgewandten Endes des jeweiligen Kanals liegt. Vorzugsweise ist das Shuttlefahrzeug bei dieser Ausgestaltung in die Kanäle beider Regale verfahrbar, also in beide Richtungen quer zur Gasse. Mit anderen Worten kann ein Gassenfahrzeug mit einem Shuttlefahrzeug eine Ebene beider Regale bedienen.

In einem erfindungsgemäßen Verfahren zum Ein- und Auslagern von Behältern in einem automatisierten Lagersystem der oben genannten Art erfolgt das Auslagern eines Behälters aus dem Regal beispielsweise mittels folgender Schritte: ein Gassenfahrzeug wird zusammen mit einem darauf angeordneten Shuttlefahrzeug in der Gasse zu dem der Gasse zugewandten Enden des Kanals verfahren, in dem sich der auszulagernde Behälter befindet, dann wird das Shuttlefahrzeug von dem Gassenfahrzeug in den Kanal verfahren und nimmt dort den der Gasse nächstliegenden ersten Behälter des Kanals auf und fährt anschließend zusammen mit diesem ersten Behälter auf das Gassenfahrzeug. Wenn der erste Behälter schon der auszulagernde Behälter ist, kann das Gassenfahrzeug mit dem Shuttlefahrzeug und diesem ersten Behälter in der Gasse zu einer Übergabestation fahren und den Behälter beispielsweise an einen Zwischenförderer übergeben. Wenn der erste Behälter des Kanals jedoch nicht der auszulagernde Behälter ist, schiebt das Shuttlefahrzeug zunächst den ersten Behälter von der Gasse aus in einen anderen Kanal ein, in dem wenigstens ein Stellplatz frei ist. Anschließend werden die vorherigen Schritte wiederholt, bis der auszulagernde Behälter auf dem Gassenfahrzeug ist und dann von diesem in der Gasse zu einer Übergabestation gefahren und beispielsweise an einen Zwischenförderer übergeben wird.

Zum Einlagern eines Behälters in das Regal wird ein Gassenfahrzeug zusammen mit einem darauf angeordneten Shuttlefahrzeug und dem einzulagernden Behälter in der Gasse zu dem der Gasse zugewandten Enden des Kanals verfahren, in den der Behälter eingelagert werden soll. Anschließend wird das Shuttlefahrzeug von dem Gassenfahrzeug mit dem einzulagernden Behälter in den Kanal verfahren, wobei etwaige bereits in dem Kanal befindliche Behälter hierbei innerhalb des Kanals von der Gasse weg, d.h. bergauf, geschoben werden, und das Shuttlefahrzeug setzt den einzulagernden Behälter auf dem der Gasse nächstliegenden Stellplatz ab.

Wenn das Regal übereinander mehrere Ebenen aufweist, kann als zusätzlicher Schritt der vertikale Transport des ein- oder auszulagernden Behälters mittels eines Lifts erforderlich sein.

Wenn ein beispielsweise separates Shuttlefahrzeug mit einer Hubeinrichtung vorgesehen ist, kann das Shuttlefahrzeug im Kanal eine Weckfunktion für hängengebliebene Behälter ausführen. In diesem Fall fährt das Shuttlefahrzeug den Berg hinauf, bis es den hängenden Behälter mit der in oberer Stellung befindlichen, d.h. ausgefahrenen, Hubeinrichtung trifft und mit allen anderen folgenden Behältern des Kanals etwas gegen den Berg zurückschiebt. Nach diesem Aufwecken können die Behälter hinter dem Shuttlefahrzeug definiert wieder ins Tal bis zum Endanschlag des Kanals zurückrollen.

Die Erfindung wird nachfolgend unter Bezugnahme auf die beigefügte schematische Zeichnung erläutert. Es zeigen:
- Figur 1: eine Perspektivansicht eines erfindungsgemäßen Lagersystems,
- Figur 2: ausschnittsweise eine Ebene des Lagersystems nach Figur 1,
- Figur 3: ausschnittsweise einen Teil einer Ebene des Lagersystems nach Figur 1, und
- Figur 4: eine Detailansicht eines Teils einer Ebene des Lagersystems nach Figur 1.

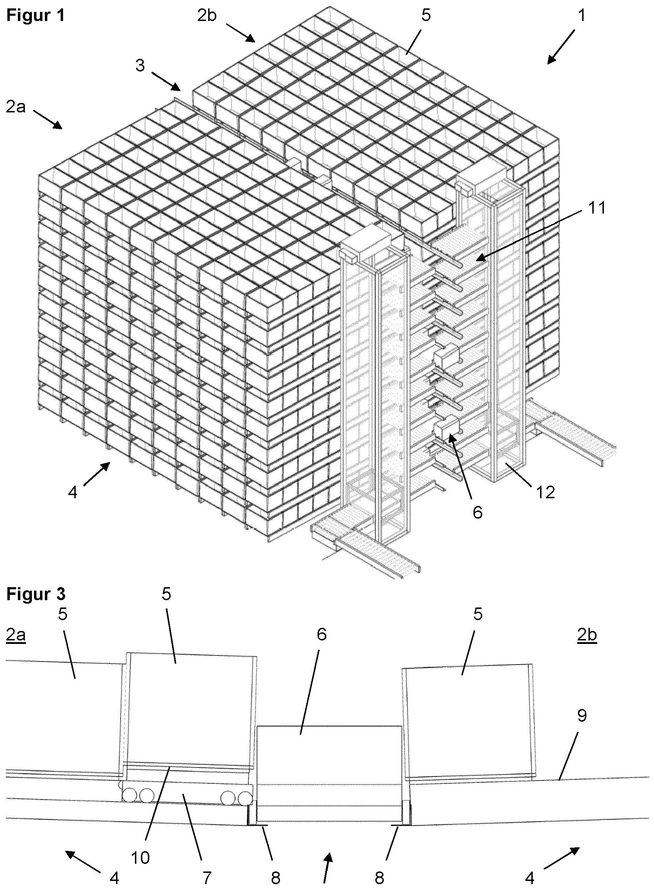

Eine rein beispielhafte Ausführungsform eines erfindungsgemäßen Lagersystems 1 ist in den Figuren 1 bis 4 dargestellt. Das Lagersystem weist hierbei wenigstens ein Regal auf, wobei in dem in den Figuren gezeigten Beispiel zwei Regale 2a, 2b vorgesehen sind, die beidseits einer zentralen Gasse 3 angeordnet sind.

Jedes Regal kann eine oder vorzugsweise mehrere vertikal übereinander liegende Ebenen aufweisen. In dem Beispiel der Figur 1 weist jedes der beiden Regale 2a, 2b jeweils zehn übereinander liegende Ebenen auf. In jeder Ebene können mehrere Kanäle 4 vorgesehen sein, wobei in dem dargestellten Beispiel in jeder Ebene zehn Kanäle 4 vorgesehen sind.

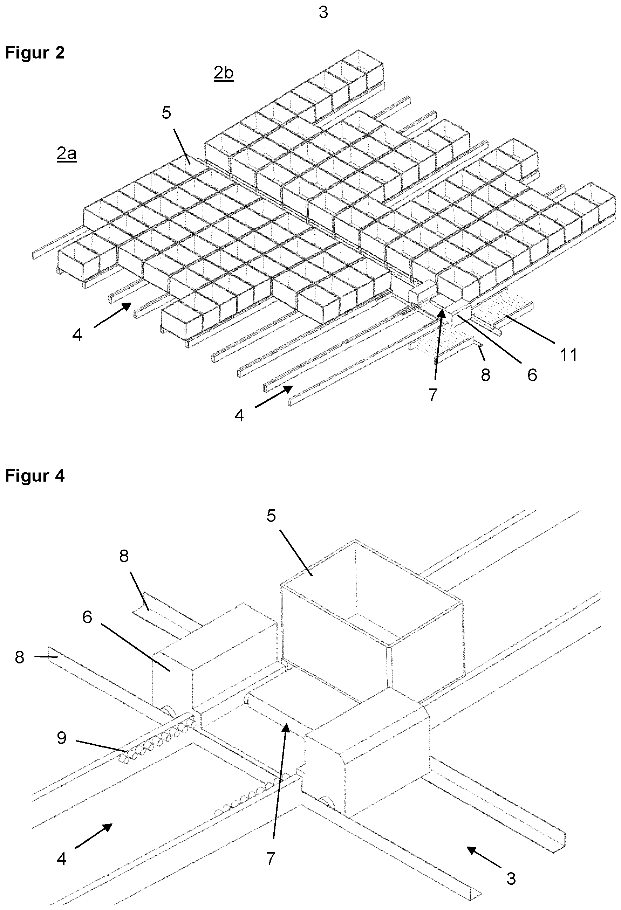

Jeder der Kanäle 4 ist zur Aufnahme wenigstens eines Behälters 5 ausgebildet. In dem dargestellten Beispiel können, wie in Figur 2 gezeigt, bis zu neun Behälter 5 in jedem Kanal 4 angeordnet werden. Es hat sich hinsichtlich der Bedienungszeiten als besonders vorteilhaft erwiesen, wenn jeder Kanal 4 zwischen fünf und zehn Behälter 5 aufnehmen kann. Die Kanäle 4 sind, wie insbesondere aus Figur 3 ersichtlich ist, gegenüber der Horizontalen um etwa 1,8° geneigt ausgerichtet, so dass das der Gasse 3 zugewandte Ende jedes Kanals 4 vertikal unterhalb dem der Gasse 3 abgewandten Ende des entsprechenden Kanals 4 liegt. Die Anzahl, Anordnung und Größe der Ebenen und Kanäle kann dem Lagerbedarf entsprechend flexibel angepasst werden.

In jeder Ebene kann ein Gassenfahrzeug 6 entlang der Gasse 3 fahren. Es wird bevorzugt, wenn jede Ebene ein separates Gassenfahrzeug 6 aufweist. Alternativ ist es auch möglich, Gassenfahrzeuge 6 vertikal zwischen den Ebenen zu bewegen, so dass ein einzelnes Gassenfahrzeug 6 beispielsweise zwei Ebenen bedienen kann.

Das Gassenfahrzeug 6 ist in der dargestellten Ausführungsform mit einem Shuttlefahrzeug 7 ausgestattet, das zusammen mit dem Gassenfahrzeug 6 entlang der Gasse 3 verfahren werden kann. Zudem ist es möglich, das Shuttlefahrzeug 7 relativ zu dem Gassenfahrzeug 6 in einzelne Kanäle 4 zu verfahren. Hierzu kann das Shuttlefahrzeug 7 mit einem geeigneten Antriebssystem, beispielsweise einem Zahnradantrieb, der in kanalseitige Zahnstangen eingreift (nicht gezeigt), versehen sein, der in der Lage ist, ausreichend viele Behälter 5 entgegen der Schwerkraft, d.h. bergauf, in dem Kanal 4 zu verschieben.

In dem dargestellten Ausführungsbeispiel ist in der Gasse 3 jeder Ebene ein paar Schienen 8 vorgesehen, auf denen das Gassenfahrzeug 6 fahren kann. Die Schienen 8 können Bestandteil einer Energieversorgung für den beispielsweise elektrischen Antrieb des Gassenfahrzeugs 6 sein und/oder Leitungen für die Energieversorgung sowie gegebenenfalls die Steuerung des Gassenfahrzeugs 6 tragen.

Die einzelnen Kanäle 4 sind vorzugsweise derart ausgelegt, dass die Behälter 5 in den Kanälen mit möglichst geringem Widerstand gleiten, rutschen oder rollen können. In dem dargestellten Beispiel sind die Kanäle 4 mit Röllchenbahnen 9 ausgestattet, sodass die Behälter 5 aufgrund der Neigung der Kanäle 4 durch den Einfluss der Schwerkraft innerhalb der Kanäle 4 in Richtung zu der Gasse 3, d.h. bergab, rollen bzw. gleiten. Ein nicht näher dargestellter Anschlag kann verhindern, dass die Behälter 5 bis in die Gasse 3 hinein rollen. Entsprechend sind in Figur 2 die Kanäle 4, soweit darin Behälter 5 vorhanden sind, immer auf der der Gasse 3 zugewandten Seite mit Behältern 5 befüllt und etwaige freie Plätze in den jeweiligen Kanälen 4 befinden sich an dem der Gasse 3 abgewandten Ende.

Das Shuttlefahrzeug 7 weist beispielsweise eine Hubeinrichtung 10 auf, um einen Behälter 5 innerhalb eines Kanals 4 anzuheben. Auf diese Weise ist es möglich, den jeweils der Gasse 3 nächstliegenden Behälter 5 aus dem jeweiligen Kanal 4 zu entnehmen oder einen Behälter 5 in einem Kanal 4 abzusetzen.

In dem in den Figuren dargestellten Beispiel ist in jeder Ebene jedes Regals 2a, 2b an einer Stirnseite ein Förderband 11 vorgesehen, das einen Zwischenförderer bildet. Das Shuttlefahrzeug 7 kann Behälter 5 mittels der Hubeinrichtung 10 von dem Gassenfahrzeug 6 auf das Förderband 11 absetzen oder Behälter 5 von dem Förderband 11 auf das Gassenfahrzeug 6 aufnehmen. Das Förderband 11 kann dabei auch als Zwischenpuffer genutzt werden, um einen oder mehrere Behälter 5 temporär zwischenzulagern.

Weiter ist in dem dargestellten Beispiel jedes Regal 2a, 2b mit einem eigenen Lift 12 versehen, der die einzelnen Ebenen der Regale in vertikaler Richtung miteinander verbindet. Alternativ kann auch ein einzelner Lift 12 beide Regale 2a, 2b andienen. Vorzugsweise sind die Förderbänder 11 zwischen den Gassen 3 jeder Ebene und dem Lift 12 zwischengeschaltet.

Um einen bestimmten Behälter 5 aus dem erfindungsgemäßen Lagersystem 1 auszulagern, wird ein Gassenfahrzeug 6 zusammen mit einem darauf angeordneten Shuttlefahrzeug 7 von einer nicht dargestellten Steuerung innerhalb der entsprechenden Ebene, in der der Behälter 5 eingelagert ist, innerhalb der Gasse 3 zu dem Kanal 4 gefahren, in dem der Behälter 5 eingelagert ist. Das Shuttlefahrzeug 7 kann dann mittels der Hubeinrichtung 10 den Behälter 5, der der Gasse 3 am nächsten ist, aufnehmen und auf das Gassenfahrzeug 6 fördern.

Wenn der so auf das Gassenfahrzeug 6 aufgeladene Behälter bereits der auszulagernde Behälter 5 ist, kann das Gassenfahrzeug 6 den Behälter 5 bis zu dem Förderband 11 transportieren, wo das Shuttlefahrzeug 7 den Behälter 5 an das Förderband 11 übergibt und von diesem gegebenenfalls mittels des Lifts 12 bis zu einer Transportbahn für den weiteren Abtransport befördert wird.

Wenn dagegen der auszulagernde Behälter 5 nicht der der Gasse 3 am nächsten gelegene Behälter innerhalb des Kanals 4 ist, muss zunächst der Kanal 4 soweit freigeräumt werden, bis der auszulagernde Behälter 5 an der der Gasse 3 nächstgelegenen Position des Kanals 4 ist. Hierzu wird zunächst der der Gasse 3 am nächsten gelegene Behälter aus dem Kanal 4 entnommen und in einem anderen Kanal 4 des Lagersystems 1 oder auf dem Förderband 11 abgesetzt. Dieser Vorgang wird solange wiederholt, bis der auszulagern der Behälter 5 der der Gasse 3 am nächsten gelegene Behälter in dem Kanal 4 ist und dann wie oben beschrieben abtransportiert werden kann.

Das Einlagern eines Behälters 5 in einen Kanal 4 erfolgt dabei mittels des Gassenfahrzeugs 6 und des Shuttlefahrzeugs 7. Hierzu wird das mit dem Behälter 5 beladene Shuttlefahrzeug 7 in den Kanal 4 eingefahren, wobei etwaige bereits in dem Kanal 4 vorhandene Behälter 5 entgegen der Schwerkraft, d.h. bergauf, in dem Kanal 4 von der Gasse 3 weg verschoben werden, so dass ein Abstellplatz für den Behälter 5 an dem der Gasse 3 zugewandten Ende des Kanals 4 frei wird. Dort kann der Behälter dann mittels der Hubeinrichtung 10 abgesetzt werden und das Shuttlefahrzeug 7 wird auf das Gassenfahrzeug 6 zurückgeholt.

Auf diese Weise können auch in einem Kanal 4 verklemmte Behälter 5, die nicht mehr selbsttätig zu dem der Gasse 3 zugewandten Ende des Kanals 4 rollen oder gleiten, mittels des Shuttlefahrzeugs 7, gegebenenfalls mit ausgefahrener Hubeinrichtung 10, soweit verschoben werden, bis sie wieder frei sind.

### Bezugszeichen

- 1: Lagersystem
- 2a, b: Regal
- 3: Gasse
- 4: Kanal
- 5: Behälter
- 6: Gassenfahrzeug
- 7: Shuttlefahrzeug
- 8: Schiene
- 9: Röllchenbahn
- 10: Hubeinrichtung
- 11: Zwischenförderer (Förderband)
- 12: Lift

## Patentansprüche

1. Automatisiertes Lagersystem mit
- wenigstens einem Regal (2a, 2b), das parallel zu einer Gasse (3) angeordnet ist und wenigstens eine Ebene mit mehreren quer zur Gasse (3) angeordneten Kanälen (4) aufweist, wobei die Kanäle (4) gegenüber der Horizontalen derart geneigt ausgerichtet sind, dass das der Gasse (3) zugewandte Ende jedes Kanals (4) vertikal unterhalb des der Gasse (3) abgewandten Endes des jeweiligen Kanals (4) liegt,
- wenigstens einem in der Gasse (3) entlang der der Gasse (3) zugewandten Enden der Kanäle (4) verfahrbaren Gassenfahrzeug (6) zum Auslagern von Behältern (5) aus den Kanälen (4), und
- einer Steuerung zum autonomen Verfahren des wenigstens einen Gassenfahrzeugs (6),
**dadurch gekennzeichnet, dass** das Gassenfahrzeug (6) ein Shuttlefahrzeug (7) aufweist, das zum Einlagern von Behältern (5) in die Kanäle (4) dazu ausgebildet und eingerichtet ist, relativ zu dem Gassenfahrzeug (6) und quer zur Gasse (3) in die Kanäle (4) hinein zu fahren.

2. Automatisiertes Lagersystem nach Anspruch 1, **dadurch gekennzeichnet, dass** jeder Kanal (4) wenigstens eine quer zur Gasse (3) verlaufende Zahnstange aufweist, und dass das Shuttlefahrzeug (7) wenigstens ein antreibbares Zahnrad zum Eingriff mit der Zahnstange des jeweiligen Kanals (4) aufweist.

3. Automatisiertes Lagersystem nach einem der vorhergehenden Ansprüche, **dadurch gekennzeichnet, dass** die Kanäle (4) gegenüber der Horizontalen um 1° bis 3°, insbesondere um etwa 1,8°, geneigt ausgerichtet sind.

4. Automatisiertes Lagersystem nach einem der vorhergehenden Ansprüche, **dadurch gekennzeichnet, dass** die Länge der Kanäle (4) derart auf die Größe der ein- und auszulagernden Behälter (5) abgestimmt ist, dass jeder Kanal (4) zwischen fünf und zehn Behälter (5) aufnehmen kann.

5. Automatisiertes Lagersystem nach einem der vorhergehenden Ansprüche, **dadurch gekennzeichnet, dass** die Kanäle (4) als Röllchenbahnen (9), Rollenbahnen und/oder als Kugelbahnen ausgebildet sind.

6. Automatisiertes Lagersystem nach einem der vorhergehenden Ansprüche, **dadurch gekennzeichnet, dass** in jeder Ebene Schienen (8) parallel zur Gasse (3) verlaufen, auf denen das Gassenfahrzeug (6) verfahrbar ist.

7. Automatisiertes Lagersystem nach einem der vorhergehenden Ansprüche, **dadurch gekennzeichnet, dass** in jeder Ebene wenigstens ein quer zur Gasse (3) verlaufender Zwischenförderer, beispielsweise ein Förderband (11), vorgesehen ist.

8. Automatisiertes Lagersystem nach einem der vorhergehenden Ansprüche, bei dem das Regal (2a, 2b) übereinander mehrere Ebenen aufweist, **dadurch gekennzeichnet, dass** wenigstens ein Lift (12) vorgesehen ist, der dazu ausgebildet und eingerichtet ist, Behälter (5) zwischen den Ebenen zu verfahren.

9. Automatisiertes Lagersystem nach einem der vorhergehenden Ansprüche, **dadurch gekennzeichnet, dass** das Shuttlefahrzeug (7) mit dem Gassenfahrzeug (6) über eine Energieversorgungs- und/oder Signalleitung verbunden sind.

10. Automatisiertes Lagersystem nach einem der vorhergehenden Ansprüche, **dadurch gekennzeichnet, dass** das Gassenfahrzeug (6) über Stromschienen mit einer Energiequelle verbunden ist.

11. Automatisiertes Lagersystem nach einem der vorhergehenden Ansprüche, **dadurch gekennzeichnet, dass** das Shuttlefahrzeug (7) eine Hubeinrichtung (10) aufweist, mittels derer ein Behälter (5) zum Ein- und/oder Auslagern innerhalb eines Kanals (4) anhebbar ist.

12. Automatisiertes Lagersystem nach einem der vorhergehenden Ansprüche, **dadurch gekennzeichnet, dass** beidseits der Gasse (3) jeweils ein Regal (2a, 2b) vorgesehen ist, wobei die Kanäle (4) beider Regale (2a, 2b) gegenüber der Horizontalen derart geneigt ausgerichtet sind, dass das der Gasse (3) zugewandte Ende jedes Kanals (4) vertikal unterhalb des der Gasse (3) abgewandten Endes des jeweiligen Kanals (4) liegt, und wobei das Shuttlefahrzeug (7) in die Kanäle (4) beider Regale (2a, 2b) verfahrbar ist.

13. Verfahren zum Ein- und Auslagern von Behältern in einem automatisierten Lagersystem (1) nach einem der vorhergehenden Ansprüche,
wobei zum Auslagern eines Behälters (5) aus dem Regal (2a, 2b)
a) ein Gassenfahrzeug (6) zusammen mit einem darauf angeordneten Shuttlefahrzeug (7) in der Gasse (3) zu dem der Gasse (3) zugewandten Enden des Kanals (4) verfahren wird, in dem sich der auszulagernde Behälter (5) befindet,
b) das Shuttlefahrzeug (7) von dem Gassenfahrzeug (6) in den Kanal (4) verfahren wird, dort den der Gasse (3) nächstliegenden ersten Behälter (5) des Kanals (4) aufnimmt und anschließend zusammen mit diesem ersten Behälter (5) auf das Gassenfahrzeug (6) verfahren wird,
c1) wenn der erste Behälter der auszulagernde Behälter (5) ist, das Gassenfahrzeug (6) mit dem Shuttlefahrzeug (7) und dem ersten Behälter in der Gasse (3) zu einer Übergabestation verfahren wird, oder
c2) wenn der erste Behälter nicht der auszulagernde Behälter (5) ist, das Shuttlefahrzeug (7) zunächst den ersten Behälter von der Gasse (3) aus in einen anderen Kanal (4) einschiebt, in dem wenigstens ein Stellplatz frei ist, und die Schritte a) und b) wiederholt,
und wobei zum Einlagern eines Behälters (5) in das Regal (2a, 2b)
d) ein Gassenfahrzeug (6) zusammen mit einem darauf angeordneten Shuttlefahrzeug (7) und dem einzulagernden Behälter (5) in der Gasse (3) zu dem der Gasse zugewandten Enden des Kanals (4) verfahren wird, in den der Behälter (5) eingelagert werden soll,
e) das Shuttlefahrzeug (7) von dem Gassenfahrzeug (6) mit dem einzulagernden Behälter (5) in den Kanal (4) verfahren wird, wobei etwaige bereits in dem Kanal (4) befindliche Behälter (5) hierbei innerhalb des Kanals (4) von der Gasse (3) weg geschoben werden, und den einzulagernden Behälter (5) auf dem der Gasse (3) nächstliegenden Stellplatz absetzt.

14. Verfahren nach Anspruch 13, das, wenn das Regal (2a, 2b) übereinander mehrere Ebenen aufweist, als zusätzlichen Schritt nach Schritt c1) oder vor Schritt d) den vertikalen Transport des ein- oder auszulagernden Behälters (5) mittels eines Lifts (12) umfasst.

15. Verfahren nach Anspruch 13 oder 14, **dadurch gekennzeichnet, dass** das mit einer Hubeinrichtung (10) versehene Shuttlefahrzeug (7), wenn einer der Behälter (5) in einem Kanal (4) festgeklemmt ist, die Hubeinrichtung (10) ausfährt und so weit in den Kanal (4) fährt, bis die Hubeinrichtung (10) des Shuttlefahrzeugs (7) auf den festgeklemmten Behälter (5) trifft, und anschließend diesen und etwaige weitere Behälter (5) in dem Kanal (4) bergauf verschiebt.

## Geänderte Patentansprüche

### Geänderte Patentansprüche gemäss Regel 137(2) EPÜ.

1. Automatisiertes Lagersystem mit
- wenigstens einem Regal (2a, 2b), das parallel zu einer Gasse (3) angeordnet ist und wenigstens eine Ebene mit mehreren quer zur Gasse (3) angeordneten Kanälen (4) aufweist,
- wenigstens einem in der Gasse (3) entlang der der Gasse (3) zugewandten Enden der Kanäle (4) verfahrbaren Gassenfahrzeug (6) zum Auslagern von Behältern (5) aus den Kanälen (4), und
- einer Steuerung zum autonomen Verfahren des wenigstens einen Gassenfahrzeugs (6),
wobei das Gassenfahrzeug (6) ein Shuttlefahrzeug (7) aufweist, das zum Einlagern von Behältern (5) in die Kanäle (4) dazu ausgebildet und eingerichtet ist, relativ zu dem Gassenfahrzeug (6) und quer zur Gasse (3) in die Kanäle (4) hinein zu fahren, **dadurch gekennzeichnet, dass** die Kanäle (4) gegenüber der Horizontalen derart um 1° bis 3°, insbesondere um etwa 1,8°, geneigt ausgerichtet sind, dass das der Gasse (3) zugewandte Ende jedes Kanals (4) vertikal unterhalb des der Gasse (3) abgewandten Endes des jeweiligen Kanals (4) liegt, dass die Kanäle (4) als Röllchenbahnen (9), Rollenbahnen und/oder als Kugelbahnen ausgebildet sind, und dass das Shuttlefahrzeug (7) dazu ausgebildet und eingerichtet ist, einen Behälter (5) innerhalb des geneigt verlaufenden Kanals (4) bergauf zu fahren und dabei etwaige weitere Behälter (5) in dem Kanal (4) bergauf zu verschieben, wobei jeder Kanal (4) wenigstens eine quer zur Gasse (3) verlaufende Zahnstange aufweist und das Shuttlefahrzeug (7) wenigstens ein antreibbares Zahnrad zum Eingriff mit der Zahnstange des jeweiligen Kanals (4) aufweist.

2. Automatisiertes Lagersystem nach Anspruch 1, **dadurch gekennzeichnet, dass** die Länge der Kanäle (4) derart auf die Größe der ein- und auszulagernden Behälter (5) abgestimmt ist, dass jeder Kanal (4) zwischen fünf und zehn Behälter (5) aufnehmen kann.

3. Automatisiertes Lagersystem nach einem der vorhergehenden Ansprüche, **dadurch gekennzeichnet, dass** in jeder Ebene Schienen (8) parallel zur Gasse (3) verlaufen, auf denen das Gassenfahrzeug (6) verfahrbar ist.

4. Automatisiertes Lagersystem nach einem der vorhergehenden Ansprüche, **dadurch gekennzeichnet, dass** in jeder Ebene wenigstens ein quer zur Gasse (3) verlaufender Zwischenförderer, beispielsweise ein Förderband (11), vorgesehen ist.

5. Automatisiertes Lagersystem nach einem der vorhergehenden Ansprüche, bei dem das Regal (2a, 2b) übereinander mehrere Ebenen aufweist, **dadurch gekennzeichnet, dass** wenigstens ein Lift (12) vorgesehen ist, der dazu ausgebildet und eingerichtet ist, Behälter (5) zwischen den Ebenen zu verfahren.

6. Automatisiertes Lagersystem nach einem der vorhergehenden Ansprüche, **dadurch gekennzeichnet, dass** das Shuttlefahrzeug (7) mit dem Gassenfahrzeug (6) über eine Energieversorgungs- und/oder Signalleitung verbunden sind.

7. Automatisiertes Lagersystem nach einem der vorhergehenden Ansprüche, **dadurch gekennzeichnet, dass** das Gassenfahrzeug (6) über Stromschienen mit einer Energiequelle verbunden ist.

8. Automatisiertes Lagersystem nach einem der vorhergehenden Ansprüche, **dadurch gekennzeichnet, dass** das Shuttlefahrzeug (7) eine Hubeinrichtung (10) aufweist, mittels derer ein Behälter (5) zum Ein- und/oder Auslagern innerhalb eines Kanals (4) anhebbar ist.

9. Automatisiertes Lagersystem nach einem der vorhergehenden Ansprüche, **dadurch gekennzeichnet, dass** beidseits der Gasse (3) jeweils ein Regal (2a, 2b) vorgesehen ist, wobei die Kanäle (4) beider Regale (2a, 2b) gegenüber der Horizontalen derart geneigt ausgerichtet sind, dass das der Gasse (3) zugewandte Ende jedes Kanals (4) vertikal unterhalb des der Gasse (3) abgewandten Endes des jeweiligen Kanals (4) liegt, und wobei das Shuttlefahrzeug (7) in die Kanäle (4) beider Regale (2a, 2b) verfahrbar ist.

10. Verfahren zum Ein- und Auslagern von Behältern in einem automatisierten Lagersystem (1) nach einem der vorhergehenden Ansprüche,
wobei zum Auslagern eines Behälters (5) aus dem Regal (2a, 2b)
a) ein Gassenfahrzeug (6) zusammen mit einem darauf angeordneten Shuttlefahrzeug (7) in der Gasse (3) zu dem der Gasse (3) zugewandten Enden des Kanals (4) verfahren wird, in dem sich der auszulagernde Behälter (5) befindet,
b) das Shuttlefahrzeug (7) von dem Gassenfahrzeug (6) in den Kanal (4) verfahren wird, dort den der Gasse (3) nächstliegenden ersten Behälter (5) des Kanals (4) aufnimmt und anschließend zusammen mit diesem ersten Behälter (5) auf das Gassenfahrzeug (6) verfahren wird,
c1) wenn der erste Behälter der auszulagernde Behälter (5) ist, das Gassenfahrzeug (6) mit dem Shuttlefahrzeug (7) und dem ersten Behälter in der Gasse (3) zu einer Übergabestation verfahren wird, oder
c2) wenn der erste Behälter nicht der auszulagernde Behälter (5) ist, das Shuttlefahrzeug (7) zunächst den ersten Behälter von der Gasse (3) aus in einen anderen Kanal (4) einschiebt, in dem wenigstens ein Stellplatz frei ist, und die Schritte a) und b) wiederholt,
und wobei zum Einlagern eines Behälters (5) in das Regal (2a, 2b) d) ein Gassenfahrzeug (6) zusammen mit einem darauf angeordneten Shuttlefahrzeug (7) und dem einzulagernden Behälter (5) in der Gasse (3) zu dem der Gasse zugewandten Enden des Kanals (4) verfahren wird, in den der Behälter (5) eingelagert werden soll,
e) das Shuttlefahrzeug (7) von dem Gassenfahrzeug (6) mit dem einzulagernden Behälter (5) in den Kanal (4) verfahren wird, wobei etwaige bereits in dem Kanal (4) befindliche Behälter (5) hierbei innerhalb des Kanals (4) von der Gasse (3) weg geschoben werden, und den einzulagernden Behälter (5) auf dem der Gasse (3) nächstliegenden Stellplatz absetzt.

11. Verfahren nach Anspruch 10, das, wenn das Regal (2a, 2b) übereinander mehrere Ebenen aufweist, als zusätzlichen Schritt nach Schritt c1) oder vor Schritt d) den vertikalen Transport des ein- oder auszulagernden Behälters (5) mittels eines Lifts (12) umfasst.

12. Verfahren nach Anspruch 10 oder 11, **dadurch gekennzeichnet, dass** das mit einer Hubeinrichtung (10) versehene Shuttlefahrzeug (7), wenn einer der Behälter (5) in einem Kanal (4) festgeklemmt ist, die Hubeinrichtung (10) ausfährt und so weit in den Kanal (4) fährt, bis die Hubeinrichtung (10) des Shuttlefahrzeugs (7) auf den festgeklemmten Behälter (5) trifft, und anschließend diesen und etwaige weitere Behälter (5) in dem Kanal (4) bergauf verschiebt.
